# EUROPEAN PATENT SPECIFICATION

(11) **EP 3 202 929 B1**
(45) Date of publication and mention of the grant of the patent: **22.12.2021**
(21) Application number: 15847456.9
(22) Date of filing: 29.09.2015
(51) Int. Cl.: C22B 26/12, H01M 10/54, C22B 3/26, C22B 3/00, C22B 7/00

(54) **LEACHING METHOD FOR LITHIUM ION BATTERY SCRAP AND METHOD FOR RECOVERING METAL FROM LITHIUM ION BATTERY SCRAP**
AUSLAUGUNGSVERFAHREN FÜR SCHROTT VON LITHIUM-IONEN-BATTERIEN UND VERFAHREN ZUR RÜCKGEWINNUNG VON METALL AUS SCHROTT VON LITHIUM-IONEN-BATTERIEN
PROCÉDÉ DE LIXIVIATION POUR DÉCHET DE BATTERIE LITHIUM-ION ET PROCÉDÉ DE RÉCUPÉRATION DE MÉTAL À PARTIR D'UN DÉCHET DE BATTERIE LITHIUM-ION

(30) Priority: 30.09.2014 JP 2014202053
(43) Date of publication of application: 09.08.2017
(73) Proprietor: JX Nippon Mining & Metals Corporation, Tokyo 100-8164 (JP)
(72) Inventor: YOKOTA,Takuya, Hitachi-shi Ibaraki 317-0056 (JP); ITO,Junichi, Tsuruga-shi Fukui 914-0027 (JP)
(74) Representative: Hooiveld, Arjen Jan Winfried
(86) International application number: PCT/JP2015/077620
(87) International publication number: WO 2016/052568

(56) References cited:
- JP-A- 2012 001 750
- JP-A- 2013 112 859
- JP-A- 2013 512 345
- JP-A- 2014 162 982
- US-A- 3 761 566
- Guisheng Zeng ET AL: "Innovative Electrochemistry Technique for Leaching Cobalt from Spent Lithium Ion Batteries", Asian Journal of Chemistry, 15 February 2014 (2014-02-15), XP055469600, DOI: 10.14233/ajchem.2014.15933 Retrieved from the Internet: URL:http://www.asianjournalofchemistry.co. in/user/journal/viewarticle.aspx?ArticleID =26_5_33 [retrieved on 2018-04-23]
- C. J. Ferron: "The Control Of Manganese In Acidic Leach Liquors With Special Emphasis To Laterite Leach Liquors", SGS Mineral Services Technical Paper 2002-02, 31 December 2011 (2011-12-31), pages 1-27, XP055471834, Retrieved from the Internet: URL:https://www.sgs.com/-/media/global/doc uments/technical-documents/sgs-technical-p apers/sgs-min-tp2002-02-manganese-control- in-acidic-leach-liquors.pdf [retrieved on 2018-05-02]
- Wikipedia Article: "Iron(III) oxide-hydroxide", , 20 January 2020 (2020-01-20), XP055669139, Retrieved from the Internet: URL:https://en.wikipedia.org/wiki/Iron(III )_oxide-hydroxide [retrieved on 2020-02-17]

## Description

### TECHNICAL FIELD

The present invention relates to a method for leaching lithium ion battery scrap containing nickel and/or cobalt and a method for recovering defined metals from the lithium ion battery scrap. More particularly, it proposes a technique that can contribute to reduction of costs required for treating the lithium ion battery scrap.

### BACKGROUND ART

Lithium ion batteries used in various industrial fields including various electronic devices employ lithium metal salts containing manganese, nickel and cobalt as positive electrode materials. In recent years, there have been circumstances where quantities of the lithium ion batteries to be used have been increased and the range of use of the battery has been expanded, so that quantities of the lithium ion batteries to be discarded have been increased due to product lives of the batteries and defects in the manufacturing processes.
Under such circumstances, it would be desired to easily recover expensive elements such as nickel and cobalt as stated above from the lithium ion battery scrap discarded in large quantities, with a relatively lower cost for recycling.

In order to treat the lithium ion battery scrap for recovering valuable metals, for example, powdered or particulate lithium ion battery scrap obtained via steps of calcining, crushing, sieving and the like as required are first acid-leached using hydrogen peroxide water, and lithium, nickel, cobalt, manganese, iron, copper, aluminum, and the like that can be contained therein are then dissolved in a solution to provide a leached solution. Subsequently, the leached solution is subjected to a solvent extraction method to sequentially separate the respective metal elements. Here, each valuable metal can be recovered by first recovering iron and aluminum, then manganese and copper, then cobalt, then nickel, and finally leaving lithium in the aqueous phase.

In addition, as methods for recovering valuable metals from secondary batteries such as lithium ion batteries, Patent Documents 1 and 2 disclose "a method for recovering valuable metals from Co, Ni, Mn-containing lithium battery residue" and "a method for recovering a metal from a discarded battery", respectively.

### CITATION LIST

[Patent Document 1] Japanese Patent Application Public Disclosure (KOKAI) No. 2009-193778 A1
[Patent Document 2] Japanese Patent Application Public Disclosure (KOKAI) No. 2005-149889 A1

The article of Guisheng Zeng et al. entitled "Innovative electrochemistry technique for leaching cobalt from spent lithium ion batteries", 15 February 2014, Asian Journal of Chemistry, Vol. 26, No. 4 (2014), pages 1099 - 1102, relates to a method for leaching lithium ion battery scrap comprising leaching the scrap of lithium ion battery containing cobalt in an acidic solution, wherein the method comprises a metal leaching step of leaching cobalt by adding compounds of iron containing Fe2+ as a reducing agent.

US patent publication no. 3,761,566 discloses oxidic nickel or nickel-cobalt containing materials, e.g. lateritic nickel ores, leached at super atmospheric pressure and elevated temperature with ferrous sulfate under conditions in which the ferrous sulfate is oxidized to ferric sulfate which is caused to hydrolyze to provide free sulfuric acid for leaching the ore. In this prior art document a process isn described in which the sulfuric acid leaching of oxidic titaniferous iron-containing ore is coordinated with the leaching of oxidic nickel ore, such that the iron sulfate solution resulting from the titanium leach is employed as the leaching solution for the nickel ore by utilizing the hydrolysis of ferric sulfate under superatmospheric pressure and elevated temperature to regenerate free sulfuric acid in situ for leaching the ore, whereby the same leaching reagent is employed economically in the sequential leaching of both the titanium and nickel ores.

Japanese patent publication no. 2013 512345 relates to recovery of cobalt and manganese from waste battery materials, and a method for making liquid catalysts from recovered Co-Mn-Br (CMB). More specifically, lithium-ion powder and ternary cathode materials are produced by leaching scrap battery materials with sulfate reduction, and sequential application of the following three process steps: neutralization titration, solid-liquid separation and solvent extraction, leads to recovery of cobalt and manganese as a liquid extract comprised of a Co-Mn-Br catalyst. According to this prior art document, a CMB liquid phase catalyst that is useful for application in various manufacturing processes is provided by recovery of cobalt and manganese from waste ternary cathode and lithium-ion battery materials, enhancing the removal of other impurities, and recovering high purity cobalt and manganese.

### SUMMARY OF INVENTION

### Problem to be Solved by the Invention

In the treatment methods of the lithium ion battery scrap as stated above, the addition of hydrogen peroxide water as a reducing agent is required for acid-leaching the target metals contained in the lithium ion battery scrap, in order to improve recovery rates of metals to be recovered such as lithium, manganese, nickel and cobalt. In particular, since a positive electrode active material that may be contained in the lithium ion battery scrap is in the form of oxide of lithium and the like, a large amount of hydrogen peroxide water as the reducing agent will be also required in order to sufficiently leach the positive electrode active material.
Therefore, since the hydrogen peroxide water is relatively expensive, the above treatment methods have had a problem that the treatment costs are greatly increased due to the addition of a large amount of hydrogen peroxide water.

Further, metals other than the expensive metals, such as manganese contained in the leached solution in the above treatment methods can be recovered by the solvent extraction method in a subsequent step, as described above. However, in this case, there are problems that man-hours for extracting the metals by the solvent are increased so that costs are increased, as well as depending on the form of the metal to be recovered after the solvent extraction, it cannot be reused as it is, so that further treatment is required.

An object of the present invention is to solve such problems of the prior arts, and to provide a method for leaching lithium ion battery scrap and a method for recovering metals from the lithium ion battery scrap, which can decrease an amount of expensive hydrogen peroxide water to be added for leaching the lithium ion battery scrap, or eliminate the addition of hydrogen peroxide water, and can easily recover the metals and the like other than expensive metals to effectively reduce treatment costs.

### Means for Solving the Problem

The present inventors have found that when leaching scrap of a lithium ion battery containing nickel and/or cobalt in an acidic solution, the leaching of nickel and/or cobalt can be effectively promoted by adding manganese which is not contained in the scrap of the lithium ion battery to the acidic solution together with the scrap so that metal ions of manganese dissolved in the acidic solution are contacted with nickel and/or cobalt. Further, the present inventors have found that when leaching the scrap in the acidic solution, the metal ions of manganese dissolved in the acidic solution are precipitated and can be recovered from the leached solution by solid-liquid separation or the like.

The present inventors have considered that this will allow reduction or elimination of the hydrogen peroxide water which was conventionally required to be added in a large amount, thereby reducing treatment costs.

Based on such findings, the present invention provides a method for leaching lithium ion battery scrap as disclosed in the appended claims.

### Effects of the Invention

According to the present invention, it is possible to facilitate the leaching of nickel and/or cobalt without addition of a large amount of hydrogen peroxide water, by adding, in the metal leaching step, at least one of simple substances of manganese; compounds of manganese; and a solution containing metal ions of manganese, together with scrap to an acidic solution, so that the metal ions of manganese and/or cobalt are present in the acidic solution and are brought into contact with nickel and/or cobalt contained in the scrap.
Further, manganese can be easily recovered from the leached solution because the metal ions of manganese added are brought into contact with nickel and/or cobalt in the acidic solution, so that manganese are deposited/precipitated.
Consequently, according to the present invention, it is possible to effectively reduce costs required for treating the lithium ion battery scrap, as compared with the conventional methods.

### BRIEF DESCRIPTION OF DRAWINGS

Fig. 1 is a process drawing schematically showing a method for recovering metals from lithium ion battery scrap according to one embodiment of the present invention.
FIG. 2 is a process drawing schematically showing a method for recovering metals from lithium ion battery scrap according to another embodiment.

### MODES FOR CARRYING OUT THE INVENTION

Hereinafter, embodiments of the present invention will be described in detail.
One embodiment of the method for leaching the lithium ion battery scrap according to the present invention relates to a method for leaching the scrap of the lithium ion battery containing nickel and/or cobalt in an acidic solution, the method comprising a metal leaching step of adding at least one of simple substances of manganese; compounds of manganese and a solution containing metal ions of manganese, which are metals that are not contained in the scrap, together with the scrap to the acidic solution, so that the metal ions of manganese are present in the acidic solution, and then contacting nickel and/or cobalt contained in the scrap with the metal ions of manganese in the acidic solution containing the metal ions of manganese.

### (Lithium Ion Battery Scrap)

The lithium ion battery scrap that can be used in the present invention may be so-called battery slags, positive electrode materials or positive electrode active materials with aluminum foil or at least one of these, which were discarded due to lifetimes of battery products, manufacturing defects or other reasons, or those resulting from optional calcination, chemical treatment, crushing and/or sieving of the battery slags and the like, as stated below. However, such calcination, chemical treatment, crushing or sieving may not be required depending on a type of lithium ion battery scrap and the like.

Here, for example when the lithium ion battery scrap is the battery slag, the lithium ion battery scrap may generally contain single metal oxides consisting of one or more elements selected from the group consisting of lithium, nickel, cobalt, and manganese which form the positive electrode active material, or composite metal oxides consisting of two or more of the elements, as well as aluminum, copper, iron, and the like. Alternatively, when the scrap is the positive electrode active material, the lithium ion battery scrap may generally contain the above single metal oxides or composite metal oxides. Further, when the scrap is the positive electrode material with aluminum foil, aluminum may be further contained in addition to the single metal oxides or composite metal oxides.

### (Calcination Step)

The above lithium ion battery scrap may be optionally calcined by an already known method. This will allow unnecessary substances contained in the lithium ion battery scrap to decompose, burn or volatilize. A heating furnace that can be used for performing calcination includes a fixed bed furnace, an electric furnace, a heavy oil furnace, a kiln furnace, a stoker furnace, a fluidized bed furnace and the like.

In addition, it is possible to apply required chemical treatments together with such calcination, and adjust the lithium ion battery scrap to an appropriate size by crushing it using a single-axial crusher, a twin-screw crusher or the like, and then carry out a sieving step as follows.

### (Sieving Step)

In the sieving step, the lithium ion battery scrap crushed as described above can be sieved to remove some of aluminum and the like. For effective sieving, the lithium ion battery scrap has been preferably subjected to the heat treatment or chemical treatment as stated above, in advance.

Although such sieving is not essential, when sieving is not carried out, an amount of a reagent used in acid leaching and neutralization in a leaching step described below may increase.

### (Metal Leaching Step)

In the metal leaching step, the powdered or particulate lithium ion battery scrap obtained as described above are added to the acidic solution such as sulfuric acid, and leached out.

In this embodiment, the scrap is added to the acidic solution, and at the same time or after a certain period of time from the addition of the scrap, at least one of simple substances of manganese; the compounds of manganese and the solution containing the metal ions of manganese is added to the acidic solution. Such manganese are metals that are not contained in the lithium ion battery scrap.

The simple substances of manganese and the compounds of manganese are dissolved in the acidic solution, and the solution containing the metal ions of manganese are maintained in their states, so that the metal ions of manganese are present in the acidic solution. That is, in this case, their forms of manganese before addition are not particularly limited, as long as the metal ions of manganese are present in the acidic solution after addition.

As a result, the above metal ions of manganese will be brought into contact with nickel and/or cobalt in the acidic solution, thereby facilitating the leaching of nickel and/or cobalt on the basis of an oxidation-reduction reaction of nickel and/or cobalt with the metal ions of manganese.
Consequently, the addition of a large amount of hydrogen peroxide water to the acidic solution is not required, so that the amount of expensive hydrogen peroxide water required for leaching can be decreased or eliminated and treatment costs can be effectively reduced.

Here, the metal to be leached may be at least one metal selected from the group consisting of nickel and cobalt that can be contained in the lithium ion battery.
In order to effectively promote the leaching of such nickel and/or cobalt in the acidic solution, the metal to be added to the acidic solution may be at least one metal selected from the group consisting of manganese. In this case, the compounds of manganese may be chlorides, sulfides, hydroxides or carbonates of manganese.

In such a metal leaching step, manganese to be added to the acidic solution together with the scrap have a lower oxidation-reduction equilibrium potential of the oxidation-reduction reaction, as compared with the oxidation-reduction equilibrium potential of nickel and/or cobalt. This will effectively promote the oxidation-reduction reaction of the metal ions of manganese with nickel and/or cobalt, so that nickel and/or cobalt can be more efficiently leached.

Further, manganese herein are metals that can have different oxidation numbers, and hence they tend to reduce nickel and/or cobalt to dissolve them, as well as oxidize themselves and precipitate as oxides.

Because of implementation of the above metal leaching step, only a small amount of or no nickel and/or cobalt will be contained in the leached solution obtained in the metal leaching step when recovering nickel and/or cobalt after the metal leaching step as in a recovery method described below, so that it is also possible to reduce the labor and cost required for separating manganese and/or iron when recovering nickel and/or cobalt.

For example, when the metal added to the acidic solution is manganese, manganese dioxide is precipitated in the acidic solution and can be recovered in the metal leaching step.

By the way, the raw material of the positive electrode active material for the lithium ion battery (so-called positive electrode material precursor, etc.) contains, for example, compounds of lithium, cobalt, nickel and/or manganese, and it may also contain compounds such as, for example, chlorides, sulfides, hydroxides or carbonates of manganese.
Such a case where the raw material of the positive electrode active material contains the compounds of manganese as described above is suitable because the leaching of nickel and/or cobalt can be effectively promoted under the oxidation-reduction reaction as stated above by adding the raw material of the positive electrode active material together with the scrap to the acidic solution in the metal leaching step. The raw material of the positive electrode active material to be added to the acidic solution together with the scrap may more preferably contain manganese (II) carbonate, among the manganese compounds.

In addition, such a raw material of the positive electrode active material can be obtained as process scrap in the manufacturing process of the positive electrode active material, for example.
If only this raw material of the positive electrode active material is subjected to the acid leaching, cobalt, nickel, manganese, lithium and the like which can be contained therein will be easily dissolved, and the precipitation reaction of dissolved manganese will not sufficiently occur, and it is necessary to treat a large amount of manganese ion in the subsequent step.
In contrast, when the raw material of the positive electrode active material is mixed with the scraps and then subjected to the acid leaching as described above, the manganese ion dissolved from manganese (II) carbonate or the like that can be contained in the raw material of the positive electrode active material will function as a reducing agent, thereby promoting the leaching of cobalt and nickel in the scrap, while the precipitation reaction of dissolved manganese as manganese oxide will proceeds. Therefore, this case can more effectively leach lithium, cobalt, nickel and the like as well as more manganese dioxide and the like can be precipitated, as compared with the case where only the scrap or only the raw material of the positive electrode active material is acid-leached alone.

When adding the manganese in the metal leaching step described above, manganese are preferably added after 0 to 12 hours from the beginning of the leaching of the lithium ion battery scrap in terms of shortening the treatment time for the metal leaching step. Here, in order to shorten the treatment time as well, the leaching time of the lithium ion battery scrap in the metal leaching step is preferably from 1 hour to 24 hours.
Further, the amounts of manganese added in the metal leaching step are preferably 0.1 to 5 times the contents of nickel and/or cobalt in the lithium ion battery scrap to be leached. Accordingly, dissolution of nickel and/or cobalt can be effectively promoted and manganese can be sufficiently precipitated.

In addition, examples of the acid used in the metal leaching step may include mineral acids such as sulfuric acid and hydrochloric acid, as well as hydrogen peroxide water, and the like.
Further, the acidic solution is preferably stirred under a speed of from 0 rpm to 750 rpm at a temperature of 20°C to 80°C after adding manganese to the acidic solution.

### (Separation and Recovery Step)

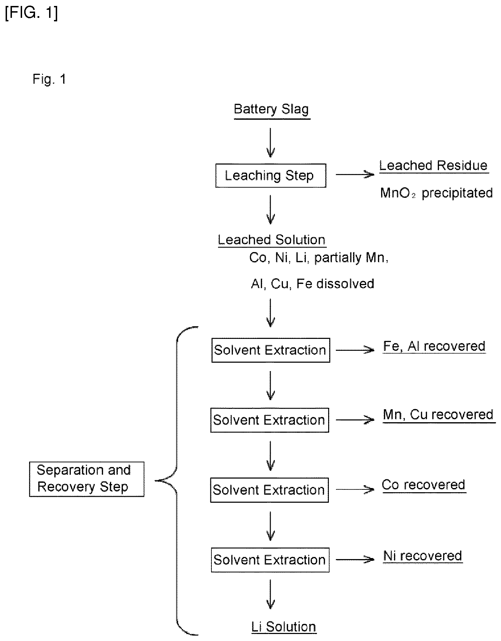

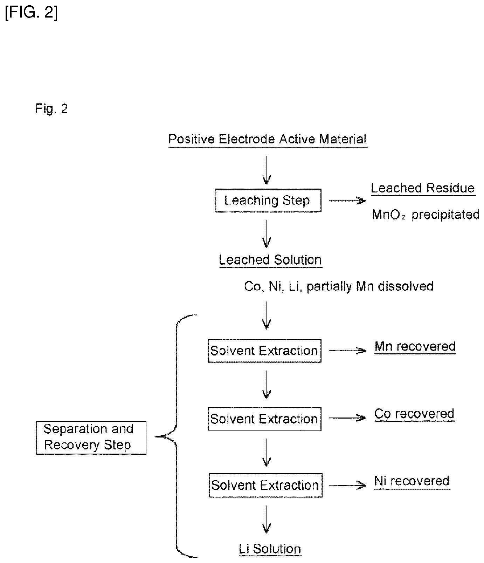

In one embodiment of the method for recovering the metals from the lithium ion battery scrap according to the present invention, a separation and recovery step is conducted after the metal leaching step described above. More particularly, this embodiment can include, for example, the steps illustrated in Fig. 1 or 2, depending on the metal elements contained in the lithium ion battery scrap.

In the separation and recovery step, the leached solution obtained in the metal leaching step is subjected to, for example, a common solvent extraction method or electrolytic method or the like, to recover each element including nickel and/or cobalt dissolved therein, as well as to separate manganese from nickel and/or cobalt and recover them when manganese remain in their dissolved forms in the leached solution.

As shown in Fig. 1, iron and aluminum are first extracted by the solvent, among lithium, nickel, cobalt, manganese, aluminum, copper, iron and the like that are contained in the target lithium ion battery scrap and dissolved in the leached solution.
Manganese and copper are then recovered from the solution thus obtained. However, in this case, the amount of manganese contained in the solution is decreased due to the promoting of precipitation reaction of manganese dioxide in the leaching step, as described above. Depending on the conditions, manganese may not be contained in the solution, and in this case, any recovery of manganese is not required. As a result, any cost required for recovering manganese herein can be effectively reduced or eliminated. Subsequently, each of cobalt and nickel can be sequentially recovered and lithium can be finally left in the solution to recover each metal.

On the other hand, the process as shown in Fig. 2 can be more easily carried out than the process as shown in Fig. 1 by sequentially recovering manganese, cobalt and nickel from the leached solution to provide a solution in which only lithium remains, because the elements contained in the lithium ion battery scrap are only lithium, nickel, cobalt, and manganese.

Here, such a separation and recovery step can provide an acidic solution obtained by reverse extraction from the solvent containing manganese, and this acidic solution containing manganese can be preferably used by adding it as the solution containing the metal ions of manganese to the acidic solution in the metal leaching step described above. This can contribute to the reduction of treatment cost due to the decrease in the amount of hydrogen peroxide water or the elimination of hydrogen peroxide water to be added in the metal leaching step.
This acidic solution may be preferably a solution of a sulfate, a solution of a hydrochloride or a solution of a nitrate, and more preferably a solution of manganese (II) sulfate.

In addition, manganese (II) sulfate generally cannot be used as it is when it is separately recycled, and requires further treatments and increases costs and man-hours, so that it is effective to use this substance in this metal leaching step.
Manganese (II) sulfate added to the acidic solution in the metal leaching step serves as a reducing agent and can effectively promote the leaching of nickel and/or cobalt.

When the above acidic solution is added as the solution containing the metal ions of manganese and/or iron in the metal leaching step, the concentration of manganese and/or iron in the acidic solution is preferably from 1 g/L to 50 g/L in order to effectively promote the dissolution of nickel and/or cobalt and the precipitation of manganese and/or iron.

Alternatively, compounds of manganese produced by subjecting the above acidic solution to a treatment such as carbonation, hydroxylation, crystallization and the like can be effectively used by adding them to the acidic solution in the metal leaching step. Examples of the compounds of manganese thus produced include carbonates, hydroxides or sulfates or like of manganese, among which manganese (II) carbonate is most suitable for use as an additive in the metal leaching step.

### EXAMPLES

The methods for leaching the lithium ion battery scrap according to the present invention were experimentally carried out and their effects were confirmed. Results will be described below. However, the descriptions provided herein are merely for the purpose of illustration, and are not intended to be limited thereto.

### (Example 1)

To 100 ml of dilute sulfuric acid (a sulfuric acid concentration of 150 g/L) was added 50ml of a solution of manganese sulfate (a manganese concentration of 60 g/L). 10 g of a LiCoO₂ based positive electrode active material was then added and stirred at 60 °C for 6 hours. As a result, all of Co in the LiCoO₂-based positive electrode active material could be dissolved.

### (Example 2)

To 100 ml of dilute sulfuric acid (a sulfuric acid concentration of 200 g/L) was added 6 g of manganese carbonate. 10 g of a LiCoO₂ -based positive electrode active material was then added and stirred at 60 °C for 6 hours. As a result, all of Co in the LiCoO₂-based positive electrode active material could be dissolved.

### (Comparative Example)

To 100 ml of dilute sulfuric acid (a sulfuric acid concentration of 150 g/L) was added 10 g of a LiCoO₂-based positive electrode active material, and stirred at 60 °C for 6 hours. As a result, all of Co in the LiCoO₂-based positive electrode active material could not be dissolved.

### (Reference Example)

To 100 ml of dilute sulfuric acid (a sulfuric acid concentration of 150 g/L) was added 15 ml of hydrogen peroxide water (35%). 10 g of a LiCoO₂ -based positive electrode active material was then added and stirred at 60 °C for 6 hours. All of Co in the LiCoO₂ -based positive electrode active material could be dissolved.

It is understood from the results of Examples 1 and 2 and Comparative Example described above, that even if only the positive electrode active material is added to theacidic solution, cobalt in the positive electrode active material cannot be sufficiently dissolved, but cobalt in the positive electrode active material can be effectively dissolved by adding manganese that is not contained in the positive electrode active material, without adding hydrogen peroxide water.

## Claims

1. A method for leaching lithium ion battery scrap comprising leaching the scrap of the lithium ion battery containing nickel and/or cobalt in an acidic solution, the method comprising a metal leaching step of leaching nickel and/or cobalt by adding, together with the scrap, at least one of simple substances of manganese, compounds of manganese and a solution containing metal ions of manganese which are not contained in the scrap, to the acidic solution so that the metal ions of manganese are present in the acidic solution, and then contacting nickel and/or cobalt contained in the scrap with the metal ions of manganese in the acidic solution containing the metal ions of manganese, wherein in the metal leaching step, nickel and/or cobalt is leached based on an oxidation-reduction reaction of nickel and/or cobalt with the metal ions of manganese, and
wherein, in the metal leaching step, the metal ions of manganese present in the acidic solution are precipitated as oxides by oxidation.

2. The method for leaching lithium ion battery scrap according to claim 1, wherein, in the metal leaching step, a raw material of a positive electrode active material for the lithium ion battery is added together with the scrap to the acidic solution, and wherein the raw material of the positive electrode active material for the lithium ion battery is obtained as process scrap in the manufacturing process of a positive electrode active material and contains compounds of manganese.

3. A method for recovering metals from lithium ion battery scrap, comprising the metal leaching step in the method for leaching lithium ion battery scrap according to claim 1 or 2, and a separation and recovery step of separating manganese leached in a leached solution obtained in the metal leaching step from nickel and/or cobalt by solvent extraction and recovering manganese from the leached solution.

4. The method for recovering the metals from the lithium ion battery scrap according to claim 3, wherein the solution containing the metal ions of manganese, or the compounds of manganese, which are added together with the scrap to the acidic solution in the metal leaching step is/are an acidic solution resulting from inverse extraction of the solvent containing manganese in the separation and recovery step, or compounds of manganese produced from the acidic solution resulting from the inverse extraction.

## Patentansprüche

1. Verfahren zum Auslaugen von Lithium-Ionen-Batterie-Schrott, das das Auslaugen des Schrotts der Lithium-Ionen-Batterie, die Nickel und/oder Kobalt enthält, in einer sauren Lösung aufweist, wobei das Verfahren einen Metallauslaugeschritt des Auslaugens von Nickel und/oder Kobalt durch Hinzufügen zusammen mit den Schrott von wenigstens einem von einfachen Mangan-Substanzen, Manganverbindungen und einer Lösung aufweist, die Mangan-Metallionen enthält, die nicht im Schrott enthalten sind, zur sauren Lösung, sodass die Mangan-Metallionen in der sauren Lösung vorhanden sind, und dann Kontaktieren des Nickels und/oder Kobalts, das in dem Schrott enthalten ist, mit den Mangan-Metallionen in der sauren Lösung, die die Mangan-Metallionen enthält, wobei im Metallauslaugeschritt Nickel und/oder Kobalt basierend auf einer Oxidations-Reduktions-Reaktion von Nickel und/oder Kobalt mit den Mangan-Metallionen ausgelaugt wird, und
wobei im Metallauslaugeschritt die Metallionen des in der sauren Lösung vorhandenen Mangans als Oxide durch Oxidation ausgefällt werden.

2. Verfahren zum Auslaugen von Schrott einer Lithium-Ionen-Batterie nach Anspruch 1, wobei im Metallauslaugeschritt ein Rohmaterial eines aktiven positiven Elektrodenmaterials für die Lithium-Ionen-Batterie zusammen mit dem Schrott zur sauren Lösung hinzugefügt wird, und wobei das Rohmaterial des aktiven positiven Elektrodenmaterials für die Lithium-Ionen-Batterie als Prozessschrott im Herstellungsprozess eines aktiven positiven Elektrodenmaterials erhalten wird und Manganverbindungen enthält.

3. Verfahren zur Rückgewinnung von Metallen aus Lithium-Ionen-Batterie-Schrott, das den Metallauslaugeschritt nach dem Verfahren zum Auslaugen des Lithium-Ionen-Batterie-Schrotts nach Anspruch 1 oder 2 aufweist, und einen Trennungs-und Rückgewinnungsschritt des Trennens des in einer Auslaugelösung ausgelaugten Mangans, das im Metallauslaugeschritt aus Nickel und/oder Kobalt durch eine Lösungsmittelextraktion erhalten wird und Rückgewinnen des Mangans aus der Auslaugelösung.

4. Verfahren zur Rückgewinnung von Metall aus Lithium-Ionen-Batterie-Schrott nach Anspruch 3, wobei die Lösung, die die Mangan-Metallionen oder die Manganverbindungen enthält, die zusammen mit dem Schrott zur sauren Lösung im Metallauslaugeschritt hinzugegeben werden, eine saure Lösung ist, die aus einer umgekehrten Extraktion des Mangan enthaltenden Lösungsmittels in dem Trennungs- und Rückgewinnungsschritt entsteht, oder von Manganverbindungen, die aus der sauren Lösung hergestellt werden, die aus der umgekehrten Extraktion entsteht.

## Revendications

1. Procédé de lixiviation de déchets de batterie lithium-ion comprenant la lixiviation des déchets de la batterie lithium-ion contenant du nickel et/ou du cobalt dans une solution acide, le procédé comprenant une étape de lixiviation de métal afin d'assurer la lixiviation du nickel et/ou du cobalt en ajoutant, ensemble avec les déchets, au moins l'un parmi des substances simples de manganèse, des composés de manganèse et d'une solution contenant des ions métalliques de manganèse qui ne sont pas contenus dans les déchets, à la solution acide de telle sorte que les ions métalliques de manganèse soient présents dans la solution acide, et ensuite en mettant en contact le nickel et/ou le cobalt contenus dans les déchets avec les ions métalliques de manganèse dans la solution acide contenant les ions métalliques de manganèse, dans lequel, dans l'étape de lixiviation de métal, le nickel et/ou le cobalt est soumis à une lixiviation sur la base d'une réaction d'oxydoréduction du nickel et/ou du cobalt avec les ions métalliques de manganèse, et
dans lequel, dans l'étape de lixiviation de métal, les ions métalliques de manganèse présents dans la solution acide sont précipités sous forme d'oxydes par oxydation.

2. Procédé de lixiviation de déchets de batterie lithium-ion selon la revendication 1, dans lequel,
dans l'étape de lixiviation de métal, un matériau brut d'un matériau actif d'électrode positive de la batterie lithium-ion est ajouté ensemble avec les déchets à la solution acide, et dans lequel le matériau brut du matériau actif d'électrode positive de la batterie lithium-ion est obtenu sous la forme de déchets de traitement dans le procédé de fabrication d'un matériau actif d'électrode positive et contient des composés de manganèse.

3. Procédé de récupération de métaux à partir de déchets de batterie lithium-ion, comprenant l'étape de lixiviation de métal dans le procédé de lixiviation de déchets de batterie lithium-ion selon la revendication 1 ou 2, et une étape de séparation et de récupération destinée à séparer du manganèse après lixiviation dans une solution de lixiviation obtenue dans l'étape de lixiviation de métal à partir du nickel et/ou du cobalt par extraction par solvant et récupération du manganèse à partir de la solution de lixiviation.

4. Procédé de récupération de métaux à partir de déchets de batterie lithium-ion selon la revendication 3, dans lequel la solution contenant les ions métalliques de manganèse, ou les composés de manganèse, qui sont ajoutés, ensemble avec les déchets, à la solution acide dans l'étape de lixiviation de métal est/sont une solution acide résultant de l'extraction inverse du solvant contenant du manganèse dans l'étape de séparation et de récupération, ou des composés de manganèse produits à partir de la solution acide résultant de l'extraction inverse.
